# EUROPEAN PATENT APPLICATION

(11) **EP 1 993 268 A2**
(43) Date of publication of application: **19.11.2008**
(21) Application number: 08156326.4
(22) Date of filing: 16.05.2008
(51) Int. Cl.: H04L 29/12

(54) **Method, system and relay device for transmitting packet**

(30) Priority: 18.05.2007 CN 200710107096; 16.04.2008 WO PCT/CN2008/070720
(71) Applicant: Huawei Technologies Co., Ltd., Longgang District, Shenzhen Guangdong 518129 (CN)
(72) Inventor: Li, Zhiqiang, 518129, Shenzhen Guangdong (CN); Liu, Shouwen, 518129, Shenzhen Guangdong (CN)
(74) Representative: Hengelhaupt, Jürgen

(57) **Abstract**

A method, system and relay device for transmitting a packet. The method includes: receiving an upstream packet carrying an original user identifier of a user; establishing a corresponding relationship between user related information on the user and a replacement user identifier in accordance with the upstream packet carrying the original user identifier of the user, and sending an upstream packet carrying the replacement user identifier of the user to a server, the replacement user identifier being capable of distinguishing the user from others; determining the user related information corresponding to the replacement user identifier in the downstream packet in accordance with the corresponding relationship, and transmitting the downstream packet in accordance with the user related information. Therefore, a Client can be located in accordance with a received downstream packet in the case that one original user identifier being capable of identifying the Client conflicts with another.

## Description

This application claims priorities to Chinese patent application No. 200710107096.1, entitled "Method, System and System for Identifying User" and filed with the Chinese Patent Office on May 18, 2007, and PCT application No. PCT/CN2008/070720, filed on April 16, 2008, the contents of which are hereby incorporated by reference in their entireties.

### Field of the Invention

The present invention relates to the field of communications, and in particular to a method, system and relay device for transmitting a packet.

### Background of the Invention

To ensure the security of data in a Client, some communication systems monitor Dynamic Host Configuration Protocol (DHCP) packets exchanged between the Client and a Server by using proxy and/or snooping function in relay devices (DHCP Relay devices on L2 and L3). A Relay device can obtain Client related information on receiving an upstream request packet from the Client, and sends the request packet to the Server. The Client related information includes an original user identifier capable of identifying the user. The Server carries the original user identifier in a response DHCP packet. The Relay device, on receiving the response DHCP packet from the Server, can determine user related information corresponding to the Client in accordance with the original user identifier carried in response DHCP packet, so that the Relay device can locate the Client and determine data stored in the Client in accordance with the user related information.

At present, the DHCP protocol specifies that a hardware type and hardware address may be used to identify the Client, e.g. in Ethernet, the hardware type and hardware address are a MAC address. In an upstream DHCP packet, the MAC address may be filled with a chaddr field, and the chaddr field is returned without any change in a downstream DHCP packet. In addition, in the upstream DHCP packet, the MAC address may be filled with a field Client-identifier, and the field Client-identifier is not returned in a downstream DHCP packet.

In practical application, a field Transaction ID (XID) in a DHCP packet may be alternatively used to identify the user. The field XID is randomly generated by each Client and is returned without any change in a response packet from the Server.

When trying to achieve the present invention, the inventor has found that: if there are many Clients, MAC addresses may conflict, and XIDs generated by the multiple Clients may also conflict. In addition, in consideration of the inconsistency of implementation of some terminal manufactures and the complexity of practical network environment, the MAC addresses and the generated XIDs of the multiple Clients may conflict with a higher possibility. The Relay device, on receiving a response DHCP packet from the Server, can not locate a corresponding Client in accordance with MAC address information and/or an XID field carried in the response DHCP packet, so that the Relay device can not determine to which Client the response DHCP packet from the Server should be sent and can not obtain any data stored in the Client.

### Summary of the Invention

An embodiment of the present invention provides a method, system and relay device for transmitting a packet, so that a Client can be located in accordance with a received downstream packet in the case that an original user identifier capable of identifying the Client conflicts with another.

Embodiments of the present invention are implemented by the following technical solutions.

An embodiment of the present invention provides a method for transmitting a packet, including:

receiving an upstream packet carrying an original user identifier of a user;

establishing a corresponding relationship between user related information of the user and a replacement user identifier in accordance with the upstream packet carrying the original user identifier of the user, sending an upstream packet carrying the replacement user identifier of the user, wherein the replacement user identifier is capable of distinguishing the user from others;

receiving a downstream packet carrying the replacement user identifier from a server; and

determining the user related information corresponding to the replacement user identifier in the downstream packet in accordance with the corresponding relationship, and transmitting the downstream packet in accordance with the user related information.

Another embodiment of the present invention provides a relay device, including: a configuration unit and a locating unit;

the configuration unit is configured to obtain user related information in accordance with a received upstream packet carrying a replacement user identifier of a user and information identifying a location where the upstream packet is received, to establish a corresponding relationship between the replacement user identifier and the user related information, and to forward the upstream packet, wherein the replacement user identifier of the user is capable of distinguishing the user from others; and

the locating unit is configured to determine the user related information corresponding to the replacement user identifier in accordance with the replacement user identifier carried in a received downstream packet and the corresponding relationship in the configuration unit, and to send the downstream packet in accordance with the user related information.

Another embodiment of the present invention provides a relay device, including:

a transmission unit, configured to send an upstream packet carrying a replacement user identifier in accordance with an original user identifier of a user carried in an upstream packet received by the relay device, wherein the replacement user identifier of the user is capable of distinguishing the user from others; and

a processing unit, configured to send a downstream packet carrying the original user identifier in accordance with the replacement user identifier carried in a downstream packet received by the relay device.

Another embodiment of the present invention provides a communication system, including a first relay device, a second relay device, and a server,

in upstream direction,

the first relay device is configured to receive an upstream packet carrying an original user identifier of a user, to determine a replacement user identifier of the user, and to send an upstream packet to the second relay device, wherein the replacement user identifier of the user can distinguish the user from others, and the upstream packet sent by the first relay device carries the replacement user identifier of the user;

the second relay device is configured to receive the upstream packet from the first relay device, to obtain user related information in accordance with the upstream packet received by the second relay device and information identifying a location where the upstream packet is received, to establish a corresponding relationship between the user related information and the replacement user identifier corresponding to the user, and to send an upstream packet carrying the replacement user identifier to the server;

the server is configured to receive the upstream packet carrying the replacement user identifier, and to return the replacement user identifier in a downstream packet;

and in downstream direction,

the second relay device is configured to receive the downstream packet from the server, to determine the user related information in accordance with the replacement user identifier in the downstream packet, and to send the downstream packet to the first relay device in accordance with the user related information.

A further embodiment of the present invention provides a communication system, including a relay device and a server,

the relay device is configured to obtain user related information in accordance with a received upstream packet carrying an original user identifier of a user, to establish a corresponding relationship between the user related information and a replacement user identifier corresponding to the user, and to send an upstream packet to the server, wherein the replacement user identifier of the user can distinguish the user from others, and the sent upstream packet carries the replacement user identifier of the user;

the server is configured to receive the upstream packet from the relay device, and to return the replacement user identifier in a downstream packet; and

the relay device is configured to receive the downstream packet from the server, to determine the user related information in accordance with the replacement user identifier, and to send the downstream packet in accordance with the determined user related information.

In accordance with the embodiments of the present invention, a different replacement user identifier is determined for a different user and is sent via an upstream packet, the replacement user identifier is carried in a downstream packet, and related information corresponding to the user is determined in accordance with the replacement user identifier. Therefore, a Client can be located in accordance with the received downstream packet in the case that an original user identifier capable of identifying the Client conflicts with another.

### Brief Description of the Drawings

Figure 1 is a flowchart of a first embodiment of the present invention;

Figure 2 is a flowchart of a second embodiment of the present invention;

Figure 3 is a flowchart of a fourth embodiment of the present invention; and

Figure 4 is a flowchart of a fifth embodiment of the present invention.

### Detailed Description of the Invention

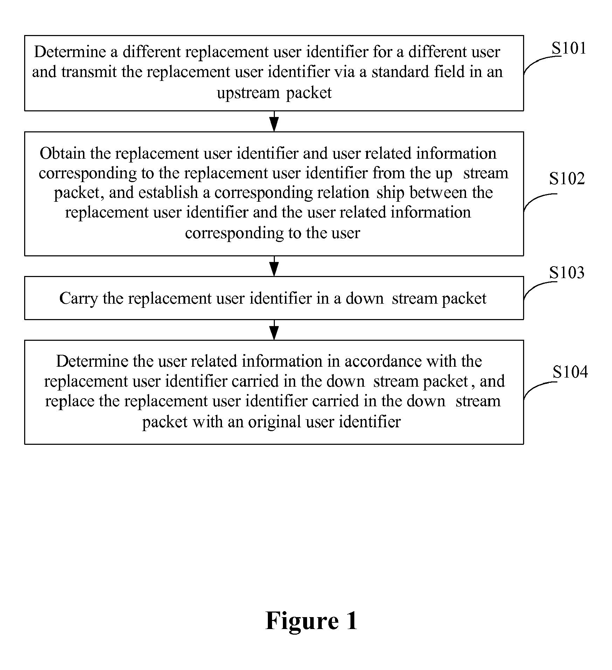

A first embodiment of the present invention provides a method for transmitting a packet with an implementing procedure as illustrated in Figure 1. The method includes:

In step S101, a different replacement user identifier is determined for a different user and is transmitted via a standard field in an upstream packet. In particular:

A device providing a Snooping and/or Proxy function, on receiving a request package from a Client, registers original user identifier carried in the packet, e.g. XID1, and determines as required a replacement user identifier, e.g. XID11, which can distinguish this user from others.

After the replacement user identifier is determined for the user, in a field of an upstream packet carrying the original user identifier, the replacement user identifier is replaced with the original user identifier. The field carrying the original user identifier is returned without any change in a downstream packet.

For example, a field carrying the XID1 in a packet may be filled with the XID11.

In step S102, user related information is obtained in accordance with the upstream packet and information on the location where the upstream packet is received, and a corresponding relationship between the user related information and the replacement user identifier corresponding to the user is established. In particular:

The device providing a Snooping and/or Proxy function obtains user related information, e.g. the hardware type and hardware address used in the DHCP protocol, or a user identifier capable of identifying a user used in other protocols, or port information, or the Virtual Local Area Network (VLAN), an IP address applied by a user, etc, in accordance with the upstream packet and information on the location where the upstream packet is received, and can establish a corresponding relationship between the replacement user identifier and the user related information corresponding to the user.

In step S103, the replacement user identifier is carried in a downstream packet. In particular:

Because the field carrying the replacement user identifier (e.g. the XID11) is the same as that carrying the original user identifier (e.g. the XID1), a Server end does not need to modify the field but encapsulates the XID11 without any change into a response packet and returns the response packet, as specified in the DHCP protocol.

In step S104, the user related information corresponding to the replacement user identifier carried in the downstream packet is determined, and the replacement user identifier carried in the downstream packet is replaced with the original user identifier. In particular:

The device providing a Snooping and/or Proxy function, on receiving the downstream response packet, distinguishes a corresponding Client in accordance with the replacement user identifier (e.g. the XID11) carried in the packet, determines data item recording the user information, and replaces the replacement user identifier (e.g. the XID11) with the original user identifier (e.g. the XID1). In other words, after the field carrying the XID11 in the packet is filled with the XID1, the location of the user can be determined in accordance with the determined user related information, and a downstream packet carrying the original user identifier is transmitted to the user in accordance with the location of the user.

The first embodiment of the present invention is described in detail as above by an example in which the XID used in DHCP acts as a replacement user identifier. However, embodiments of the present invention are not limited to the XID, and other information that may be taken as a user identifier can be applicable to the embodiments of the present invention, e.g. the hardware type and hardware address used in the DHCP protocol, or a user identifier capable of identifying a user used in other protocols, or port information, or the Virtual Local Area Network (VLAN). Further, the above information can be randomly combined for use.

It can be seen that the above embodiment describes that in the field carrying the original user identifier, the original user identifier is replaced with the replacement user identifier, and the replacement user identifier is replaced with the original user identifier. Indeed, the present invention is not limited to the only one replacement manner. Alternatively, the replacement user identifier may be added to a reserved standard field in a DHCP packet, and in downstream the standard field can be returned without any change via a downstream packet. User related information corresponding to the replacement user identifier can be determined in accordance with the replacement user identifier carried in the downstream packet. The replacement user identifier carried in the downstream packet is deleted, and the location of the user is determined in accordance with the determined user related information. A downstream packet carrying the original user identifier is transmitted to the user in accordance with the location of the user.

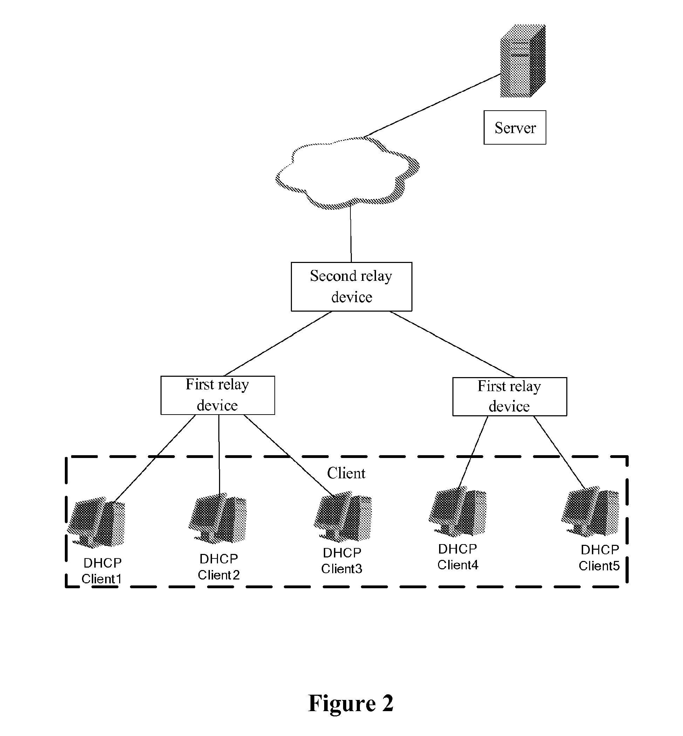

A second embodiment of the present invention provides a communication system with an architecture as illustrated in Figure 2. The communication system includes: first relay devices, a second relay device, and a server. Each of the first relay devices includes: a first transmission unit and a first processing unit. The second relay device includes: a locating unit and a configuration unit.

A first relay device determines a different replacement user identifier for a different user, and transmits the replacement user identifier determined by the first relay device via an upstream packet. In particular:

The first transmission unit determines a different replacement user identifier for a different user, and in the field carrying an original user identifier that is carried in an upstream packet, replaces the original user identifier with the replacement user identifier, and the field carrying the original user identifier can be returned without any change via a downstream packet.

The configuration unit of the second relay device obtains the replacement user identifier in accordance with the upstream packet forwarded by the first relay device, obtains user related information in accordance with the upstream packet and information on the location where the upstream packet is received, establishes a corresponding relationship between the replacement user identifier of the user and the user related information corresponding to the user, and forwards the upstream packet to the server.

The server, in accordance with the upstream packet from the second relay device, obtains the replacement user identifier of the user, and carries the replacement user identifier in a returned downstream packet. The server does not modify the replacement user identifier but directly encapsulates the replacement user identifier into a downstream packet and returns the downstream packet.

The locating unit of the second relay device determines the user related information corresponding to the replacement user identifier, in accordance with the replacement user identifier carried in the downstream packet and the corresponding relationship between the replacement user identifier and the user related information corresponding to the user configured in the configuration unit. The second relay device transmits the downstream packet to the first relay device in accordance with the user related information, in particular, transmits the downstream packet to the first relay device in accordance with the location information in the user related information.

The first processing unit of the first relay device replaces the replacement user identifier carried in the downstream packet with the original user identifier.

Each of the first relay devices provides a Proxy and/or Snooping function. The processing in the respective units is the same as that in the method embodiment, and is not described here in detail.

The replacement user identifier may be an XID, a hardware type and hardware address, port information, etc.

A third embodiment of the present invention provides another communication system with an architecture as illustrated in Figure 2. The communication system includes: first relay devices, a second relay device, and a server. Each of the first relay devices includes: a second transmission unit and a second processing unit. The second relay device includes: a locating unit and a configuration unit.

A first relay device determines a different replacement user identifier for a different user, and transmits the replacement user identifier determined by the first relay device via an upstream packet. In particular:

The second transmission unit of the first relay device determines a different replacement user identifier for a different user, and adds the replacement user identifier into a reserved standard field in an upstream packet, and the standard field can be returned without any change via a downstream packet.

The configuration unit of the second relay device obtains the replacement user identifier in accordance with the upstream packet forwarded by the first relay device, obtains user related information in accordance with the upstream packet and information on the location where the upstream packet is received, establishes a corresponding relationship between the replacement user identifier of the user and the user related information corresponding to the user, and forwards the upstream packet to the server.

The server, in accordance with the upstream packet from the second relay device, obtains the replacement user identifier of the user, and carries the replacement user identifier in a returned downstream packet. The server does not modify the replacement user identifier but directly encapsulates the replacement user identifier into the downstream packet and returns the downstream packet.

The locating unit of the second relay device determines the user related information corresponding to the replacement user identifier, in accordance with the replacement user identifier carried in the downstream packet and the corresponding relationship between the replacement user identifier and the user related information corresponding to the user configured in the configuration unit. The second relay device transmits the downstream packet to the first relay device in accordance with the user related information, in particular, transmits the downstream packet to the first relay device in accordance with the location information in the user related information.

The second processing unit of the first relay device deletes the replacement user identifier carried in the downstream packet.

The first relay device provides a Proxy and/or Snooping function. The processing in the respective units is the same as that in the method embodiment, and is not described here in detail. The replacement user identifier may be an XID, a hardware type and hardware address, port information, etc.

Alternatively, in this embodiment, the first relay device does not include the second processing unit. In this way, the downstream packet sent to the Client still carries the replacement user identifier.

It can be seen from the above embodiment that the first relay devices and the second relay device keep in concatenation, the first relay devices on the lower layer replace an original user identifier in a packet sent from each Client with a unique value, i.e. the replacement user identifier, so that the second relay device located on the upper layer can use the replacement user identifier. The second relay device located on the upper layer identifies the user with the replacement user identifier. If the upper-layer device is attached with multiple lower-layer devices, e.g. L2 DHCP Relay 1 and L2 DHCP Relay 2 in Figure 2, the respective lower-layer devices should adopt a specific mechanism, so as to ensure replacement user identifiers generated by the respective lower-layer devices are different from each other.

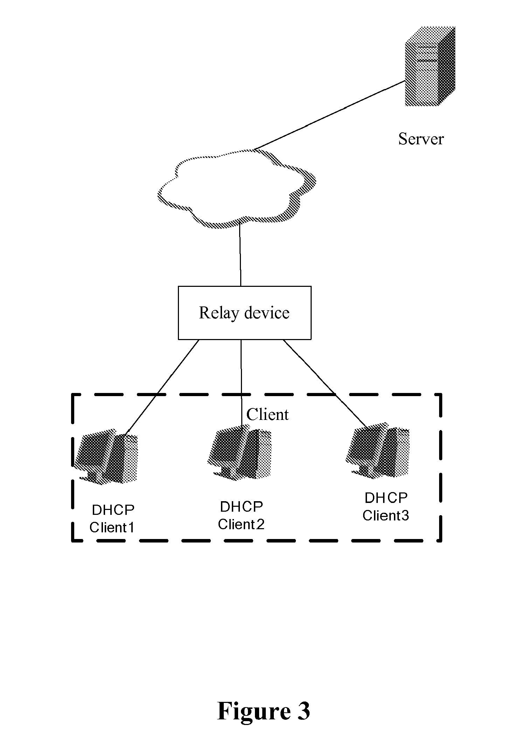

A fourth embodiment of the present invention provides a third communication system, which differs from the second embodiment and the third embodiment of the present invention in that: the functions of the first relay device and the second relay device are integrated in one relay device. In this case, the architecture of the communication system is as illustrated in Figure 3, the processing of which is substantially the same as that of the second embodiment of the present invention and is not described here in detail.

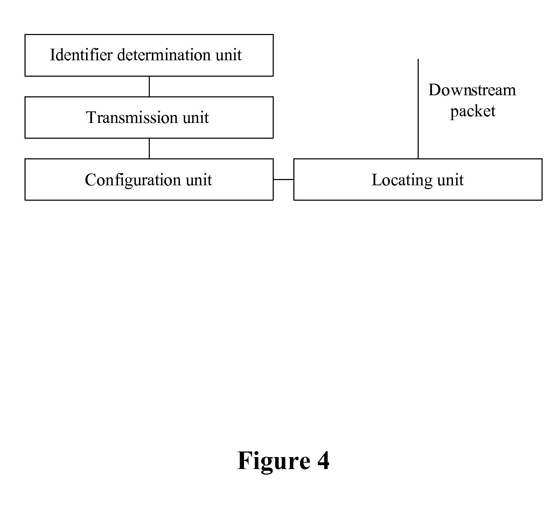

A fifth embodiment of the present invention provides a relay device with a structure as illustrated in Figure 4. The relay device includes: an identifier determination unit, a transmission unit, and a locating unit. The transmission unit includes a first transmission subunit. The relay device further includes a first processing unit. The relay device further includes a configuration unit.

The identifier determination unit determines a different replacement user identifier for a different user.

The transmission unit transmits the replacement user identifier determined by the identifier determination unit via an upstream packet, and downstream transmits a downstream packet carrying the replacement user identifier. In particular:

The first transmission subunit, in a field carrying an original user identifier carried in the upstream packet, replaces the original user identifier with the replacement user identifier, which field carrying the original user identifier can be returned without any change via a downstream packet, and downstream transmits the downstream packet carrying the replacement user identifier.

The configuration unit obtains user related information in accordance with the upstream packet and information on the location where the upstream packet is received, establishes a corresponding relationship between the user related information and the replacement user identifier corresponding to the user, and forwards the upstream packet to the server.

The locating unit obtains the replacement user identifier returned by the downstream packet, and determines the user related information corresponding to the replacement user identifier in accordance with the replacement user identifier carried in the downstream packet and configuration information in the configuration unit.

The first processing unit is configured to replace the replacement user identifier carried in the downstream packet with the original user identifier.

The relay device provides a Proxy and/or Snooping function. The replacement user identifier may be an XID, a hardware type and hardware address, port information, etc.

A sixth embodiment of the present invention provides another relay device. The relay device includes: an identifier determination unit, a transmission unit, and a locating unit. The transmission unit includes a second transmission subunit. The relay device further includes a second processing unit. The relay device further includes a configuration unit.

The identifier determination unit determines a different replacement user identifier for a different user.

The transmission unit transmits the replacement user identifier determined by the identifier determination unit via an upstream packet, and downstream transmits a downstream packet carrying the replacement user identifier. In particular:

The second transmission subunit is configured to add the replacement user identifier into a reserved standard field in an upstream packet, which standard field can be returned without any change via a downstream packet, and to downstream transmit an downstream packet carrying the replacement user identifier.

The configuration unit obtains the replacement user identifier and user related information corresponding to the replacement user identifier in accordance with the upstream packet forwarded by the first relay device, establishes a corresponding relationship between the replacement user identifier of the user and the user related information corresponding to the user, and forwards the upstream packet to the server.

The locating unit obtains the replacement user identifier returned by the downstream packet, and determines the user related information corresponding to the replacement user identifier in accordance with the replacement user identifier carried in the downstream packet and configuration information in the configuration unit.

The second processing unit deletes the replacement user identifier carried in the downstream packet.

The relay device provides a Proxy and/or Snooping function. The replacement user identifier may be an XID, a hardware type and hardware address, port information, etc.

Alternatively, in the above embodiment, the relay device does not include the second processing unit. In this way, the downstream packet sent to the Client still carries the replacement user identifier.

The relay device in the above embodiment may be a DHCP relay, or any device through which the DHCP upstream packet and downstream packet are transmitted between the DHCP Client and the Server.

It can be seen from the embodiments that the existing standard field in the upstream packet can be configured to send a different replacement user identifier determined for a different user, without any influence on the processing in the DHCP Server and Client and without any modification. The downstream packet carries the replacement user identifier, which can distinguish a different user Client, thereby avoiding conflict of original user identifiers in request packets from the respective Clients.

Apparently, those skilled in the art can make various modifications and variations to the present invention without departing from the spirit and scope of the present invention. Therefore, it is intended that all such modifications and variations shall fall within the scope of the present invention and its equivalents.

## Claims

1. A method for transmitting a packet, comprising:
receiving an upstream packet carrying an original user identifier of a user;
establishing a corresponding relationship between user related information of the user and a replacement user identifier in accordance with the upstream packet carrying the original user identifier of the user, sending an upstream packet carrying the replacement user identifier of the user, wherein the replacement user identifier is capable of distinguishing the user from others;
receiving a downstream packet carrying the replacement user identifier from a server; and
determining the user related information corresponding to the replacement user identifier in the downstream packet in accordance with the corresponding relationship, and transmitting the downstream packet in accordance with the user related information.

2. The method according to claim 1, wherein the establishing a corresponding relationship between user related information of the user and the replacement user identifier in accordance with the upstream packet carrying original user identifier of the user comprises:
obtaining the user related information in accordance with the upstream packet carrying the original user identifier of the user and information identifying a location where the upstream packet is received, and establishing a corresponding relationship between the user related information and the replacement user identifier corresponding to the user.

3. The method according to claim 1 or 2, further comprising:
the replacement user identifier of the user is carried in a field carrying the original user identifier; or
the replacement user identifier is added to a reserved standard field in the upstream packet.

4. The method according to claim 2, wherein transmitting the downstream packet in accordance with the user related information comprises:
determining the location of the user in accordance with the user related information, and transmitting the downstream packet carrying the original user identifier in accordance with the location of the user.

5. The method according to claim 1 or 4, further comprising:
replacing the replacement user identifier of the user carried in the downstream packet from the server with the original user identifier; or
deleting the replacement user identifier of the user in a reserved standard field of the downstream packet from the server.

6. The method according to claim 1, wherein the upstream packet and the downstream packet are DHCP packets.

7. The method according to claim 1, wherein the replacement user identifier comprises one or more of the following items:
port information;
a hardware type and hardware address;
a Transaction ID; and
a Virtual Local Area Network.

8. A relay device, comprising a configuration unit and a locating unit, wherein
the configuration unit is configured to obtain user related information in accordance with a received upstream packet carrying a replacement user identifier of a user and information identifying a location where the upstream packet is received, to establish a corresponding relationship between the replacement user identifier and the user related information, and to forward the upstream packet, wherein the replacement user identifier of the user is capable of distinguishing the user from others; and
the locating unit is configured to determine the user related information corresponding to the replacement user identifier in accordance with the replacement user identifier carried in a received downstream packet and the corresponding relationship in the configuration unit, and to send the downstream packet in accordance with the user related information.

9. The relay device according to claim 8, wherein the replacement user identifier comprises one or more of the following items:
port information;
a hardware type and hardware address;
a Transaction ID; and
a Virtual Local Area Network.

10. A relay device, comprising:
a transmission unit, configured to send an upstream packet carrying a replacement user identifier in accordance with an original user identifier of a user carried in an upstream packet received by the relay device, wherein the replacement user identifier of the user is capable of distinguishing the user from others; and
a processing unit, configured to send a downstream packet carrying the original user identifier in accordance with the replacement user identifier carried in a downstream packet received by the relay device.

11. The relay device according to claim 10, wherein
the transmission unit is further configured to replace the original user identifier with the replacement user identifier of the user in a field carrying the original user identifier and the processing unit is further configured to replace the replacement user identifier carried in the downstream packet received by the relay device with the original user identifier; or
the transmission unit is further configured to add the replacement user identifier of the user to a reserved standard field of the upstream packet received by the relay device.

12. The relay device according to claim 10, further comprising: a configuration unit and a locating unit, wherein
the configuration unit is configured to obtain user related information in accordance with the upstream packet received by the relay device and information identifying a location where the upstream packet is received, and to establish a corresponding relationship between the replacement user identifier and the user related information; and
the locating unit is configured to determine the user related information corresponding to the replacement user identifier in accordance with the replacement user identifier carried in the downstream packet received by the relay device and the corresponding relationship in the configuration unit.

13. The relay device according to claim 10, wherein the replacement user identifier comprises one or more of the following items:
port information;
a hardware type and hardware address;
a Transaction ID; and
a Virtual Local Area Network.

14. A communication system, comprising a first relay device, a second relay device, and a server; wherein
for upstream transmission,
the first relay device is configured to receive an upstream packet carrying an original user identifier of a user, to determine a replacement user identifier of the user, and to send an upstream packet to the second relay device, wherein the replacement user identifier of the user can distinguish the user from others, and the upstream packet sent by the first relay device carries the replacement user identifier of the user;
the second relay device is configured to receive the upstream packet from the first relay device, to obtain user related information in accordance with the upstream packet received by the second relay device and information identifying a location where the upstream packet is received, to establish a corresponding relationship between the user related information and the replacement user identifier corresponding to the user, and to send an upstream packet carrying the replacement user identifier to the server;
the server is configured to receive the upstream packet carrying the replacement user identifier, and to return the replacement user identifier in a downstream packet;
and for downstream transmission,
the second relay device is configured to receive the downstream packet from the server, to determine the user related information in accordance with the replacement user identifier in the downstream packet, and to send the downstream packet to the first relay device in accordance with the user related information.

15. A communication system, comprising a relay device and a server, wherein
the relay device is configured to obtain user related information in accordance with a received upstream packet carrying an original user identifier of a user, to establish a corresponding relationship between the user related information and a replacement user identifier corresponding to the user, and to send an upstream packet to the server, wherein the replacement user identifier of the user can distinguish the user from others, and the sent upstream packet carries the replacement user identifier of the user;
the server is configured to receive the upstream packet from the relay device, and to return the replacement user identifier in a downstream packet; and
the relay device is configured to receive the downstream packet from the server, to determine the user related information in accordance with the replacement user identifier, and to send the downstream packet in accordance with the determined user related information.
